# EUROPÄISCHE PATENTANMELDUNG

(11) **EP 0 909 104 A1**
(43) Veröffentlichungstag der Anmeldung: **14.04.1999**
(21) Anmeldenummer: 97810665.6
(22) Anmeldetag: 16.09.1997
(51) Int. Cl.: H04Q 7/38, H04Q 7/32

(54) **Verfahren für den kombinierten Betrieb von einem CT-System und einem Mobil-funksystem sowie Anordnung zur Durch-führung des Verfahrens**

(71) Anmelder: ASCOM BUSINESS SYSTEMS AG, CH-4503 Solothurn (CH)
(72) Erfinder: Christoph, Günther, Dr., CH-2544 Bettlach (CH); Affentranger, Beat, 3661 Uetendorf (CH)
(74) Vertreter: Roshardt, Werner Alfred, Dipl.-Phys.

(57) **Zusammenfassung**

Bei einem Verfahren für den kombinierten Betrieb von einem CT-System und einem Mobilfunksystem werden die für den kombinierten Betrieb benötigten zusätzlichen Informationen beim Mobilfunksystem abgefragt. Dadurch wird ein kombinierter Betrieb auch mit CT-Systemen ermöglicht, deren Feststation nicht an ein Fernmeldesystem angeschlossen ist, das zum Austausch von digitalen Daten vorgesehen ist. Insbesondere ermöglicht das erfindungsgemässe Verfahren den kombinierten Betrieb eines GSM-Mobilfunksystems und eines CT-Systems, das an ein analoges Fernmeldenetz angeschlossen ist. Zudem stellt eine Ausführungsart der Erfindung im Falle eines GSM-Mobilfunksystems in Verbindung mit einem Fernmeldenetz eine einfache Möglichkeit für die Realisierung eines Einnummern-Dienstes für die kombiniert betriebenen Systeme bereit.

## Beschreibung

### Technisches Gebiet

Die Erfindung betrifft ein Verfahren für den kombinierten Betrieb von einem CT-System und einem Mobilfunksystem sowie eine Anordnung zur Durchführung des Verfahrens.

### Stand der Technik

Aufgrund ihrer unterschiedlichen Verwendung wurden ursprünglich für Mobilfunksysteme einerseits und für Funksysteme zum Zwecke der schnurlosen Telefonie andrerseits unterschiedliche technische Standards betreffend Sendefrequenzen, Übertragungsprotokoll, Reichweite usw. entwickelt. Dies führte dazu, dass in den meisten Fällen keine Kompatibilität besteht zwischen Mobilfunksystemen, wie sie zum Beispiel für die Automobil-Telefonie verwendet werden, und sogenannten CT-Systemen (CT = Cordless Telephone), d.h. kleinräumigen Funksystemen für die schnurlose Telefonie.

Mobilfunksysteme sind nicht immer, aber häufig (z.B. GSM-Netze) zellulare Systeme mit einem zellenartig strukturierten Abdeckungsgebiet. In jeder Zelle kommunizieren die mobilen Stationen (Mobile Station) über eine Funk-Schnittstelle (air interface) mit einer ortsfesten Basisstation (Base Station). Die Basisstation kann über geeignete Kommunikationsverbindungen (z.B. drahtgebundene Fernmeldeverbindungen, Richtstrahlverbindungen, Funkverbindungen usw.) mit weiteren Zellen des gleichen Mobilfunksystems und/oder anderen Fernmeldesystemen verbunden sein. Typische Reichweiten bei Mobilfunksystemen (d.h. Zellenradien bei zellularen Systemen) liegen im Bereich von wenigen km bis ca. 60 km. Die Frequenzzuteilung erfolgt bei zellularen Mobilfunksystemen üblicherweise aufgrund einer aktiven Zellenplanung. Zellulare Mobilfunksysteme verfügen über ein Mobilschaltzentrum MSC (MSC = Mobile Switching Center), welches das Mobilitäts-Management zu unterstützt. Die mobilen Stationen liefern in gewissen Zeitabständen immer wieder Informationen über ihre Position im zellularen Netz (sogenannte Mobilitätsdaten) an das MSC. Bei zellularen Systemen mit relativ kleinen Zellen und einer ensprechend grossen Anzahl an Zellen, wie z.B. bei GSM-Netzen, umfassen die Mobilitätsdaten üblicherweise nicht direkt die Identifikation einer Basisstation, bei welcher die mobile Station erreichbar ist, sondern die Identifikation einer sogenannte Paging-Area. Eine Paging-Area umfasst eine Vielzahl von Zellen, einen ganzen Zellencluster. Sobald das MSC, das meistens auch an ein festes Fernmeldenetz (z.B. das internationale Telefonnetz) angeschlossen ist, einen für eine gesuchte mobile Station bestimmten Anruf erhält, sucht es die gesuchte mobile Station aufgrund der in einer Datenbank gespeicherten Mobilitätsdaten. Bei einem GSM-Netz wird die mobile Station zunächst über Funkruf (Pager) in seiner zuletzt gemeldeten Paging-Area gesucht. Wenn die mobile Station denn Funkruf empfängt, meldet sie sich über die Basisstation, in deren Abdeckungsbereich sie sich befindet, beim MSC, worauf das MSC den Anrufer mit der gesuchten mobilen Station verbindet.

Demgegenüber umfassen CT-Systeme üblicherweise eine oder mehrere ortsfeste Feststationen (Fixed Part), die an einen Anschluss eines meistens drahtgebundenen Festnetzes (Fernmeldenetzes) angeschlossen ist, und ein oder mehrere tragbare, schnurlose Handapparate oder Schnurlostelefone (Portable Part), die über eine Funkschnittstelle mit der Feststation kommunizieren können. Typische Reichweiten liegen im Bereich von 50 m bis zu einigen 100 m. Die Frequenzzuteilung erfolgt üblicherweise durch ein dynamisches, automatisches Verfahren auf Frequenzen, die momentan gerade frei sind.

Benutzerseitig besteht ein grosses Bedürfnis nach einer Möglichkeit zur Kombination von CT-Systemen und Mobilfunksystemen. Für Benutzer, die sowohl ein CT-System als auch ein Mobilfunktelefon benutzen, wäre eine Kombination der beiden Systeme äusserst vorteilhaft, insbesondere dann, wenn sie dadurch über ein mobiles Fernmeldeendgerät z.B. in Form eines Handfunktelefons verfügen würden, das sowohl als Schnurlostelefon in einem oder mehreren (kleinräumigen) CT-Systemen als auch als mobile Station für ein oder mehrere (grossräumige) Mobilfunksysteme verwendbar ist. Ein solches Fernmeldeendgerät, das in mindestens zwei verschiedenen Funksystemen verwendbar ist, wird als DMT (Dual Mode Terminal) bezeichnet. Idealerweise wäre der Benutzer eines DMTs stets unter der gleichen Telefonnummer erreichbar, unabhängig davon, über welches der verschiedenen Funksysteme die Kommunikation stattfindet. Dazu ist allerdings nicht nur ein entsprechend ausgerüstetes DMT erforderlich, sondern es muss auch noch das Netzwerk einen solchen Einnummern-Dienst unterstützen.

Es sind bereits mehrere Vorschläge für den kombinierten Betrieb von grossräumigen Mobilfunksystemen und kleinräumigen Funksystemen gemacht worden. Ein DECT/GIP genannter Vorschlag von ETSI sieht vor, dass der Fixed Part eines CT-Systems, das nach dem DECT Standard betrieben wird, ein Untersystem einer GSM-Basisstation emuliert, welches an das A-Interface angeschlossen wird. Bei einem anderen Vorschlag von ETSI ist vorgesehen, dass ein CT-System, das nach dem DECT Standard betireben wird, über ISDN mit einem GSM-Mobilfunksystem verbunden wird: der Fixed Part des CT-Systems wird an einen ISDN Anschluss des Mobilschaltzentrums MSC (MSC = Mobile Switching Center) angeschlossen. Das D-Kanal Signalisationsprotokoll wird erweitert, um die Signalisation für das Mobilitäts-Management zu unterstützen.

Zur Herstellung von möglichst einfachen und kostengünstigen DMTs für den kombinierten Betrieb in einem Mobilfunksystem und einem CT-System ist es wünschenswert, dass möglichst viele Gerätekomponenten wie Antenne, Empfänger, Sender usw. sowohl für das Mobilfunksystem als auch für das CT-System verwendbar sind. Aus diesem Grund sieht ein neuerer, GSM-CTS genannter Vorschlag vor, ein GSM-Mobilfunksystem mit einem CT-System zu kombinieren, das nach einem zum Zwecke der schnurlosen Telefonie modifizierten GSM-Standard betrieben wird (CTS steht für "Cordless Telecommunication System").

Alle bekannten Vorschläge für einen kombinierten Betrieb von CT-Systemen und Mobilfunksystemen gehen davon aus, dass der Fixed Part eines CT-Systems über einen ISDN Anschluss an einem Festnetz angeschlossen ist. Der grösste Teil der existierenden CT-Systeme, die in den vergangenen Jahren stark an Verbreitung gewonnen haben, verfügt jedoch noch nicht über einen ISDN-Anschluss. Dies bedeutet, dass keines dieser Systeme gemäss irgend einem der oben erwähnten Vorschläge mit einem Mobilfunksystem kombiniert werden kann.

Als mobiles Fernmeldeendgerät wird im folgenden ein Fernmeldeendgerät (Telefonapparat, Telefaxgerät, Datenübertragungsmodem o.ä) bezeichnet, das zur Kommunikation elektromagnetische Wellen über eine Funk-Schnittstelle (air interface) sendet und/oder empfängt. Ein für mindestens zwei verschiedene Funksysteme verwendbares mobiles Fernmeldeendgerät wird als DMT (Dual Mode Terminal) bezeichnet. Unter einer Feststation wird allgemein eine typischerweise ortsfeste Funkstation verstanden, im besonderen Falle eines CT-Systems deren Fixed Part. Beim Beispiel eines für den Tandem-Betrieb ausgerüsteten Automobiltelefons ist die Feststation allerdings nicht eigentlich ortsfest, da die Feststation in diesem Fall aus dem fest im Automobil angebrachten Teil der Anlage besteht. Der Abdeckungsbereich einer Funkstation ist der Bereich, in welchem ein mobiles Fernmeldeendgerät über die Funkschnittstelle mit der Funkstation kommunizieren kann. Unter der Bezeichnung "ein Fernmeldeendgerät ist bei einer Feststation registriert" (Feststation im Falle eines CT-Systems) versteht man, dass vorgängig an die Registrieung ein Registrierungsverfahren erfolgreich durchgeführt wurde. Im Verlaufe eines solchen Verfahrens wird üblicherweise unter anderem überprüft, ob es geeignete freie Kanäle zur Kommunikation zwischen dem Fernmeldeendgerät und der Station gibt, ob sich das Fernmeldeendgerät mit genügender Sicherheit im Abdeckungsbereich der Station befindet, ob das Fernmeldeendgerät eine Berechtigung zur Nutzung der Station oder des Stationennetzes hat usw. Üblicherweise muss eine Registrierung in regelmässigen Zeitabständen erneuert werden, sonst wird sie gelöscht. Den bei einer Feststation eines CT-Systems "Registrieren" und "Deregistrieren (oder Registrierung löschen)" genannten Vorgängen entsprechen bei der Basisstation eines Mobilfunksystems, insbesondere eines GSM-Netzes, "attach" (anmelden) und "detach" (abmelden) genannte Vorgänge. Unter einer Registrierung (bzw. "attach") eines Fernmeldeendgerätes bei einem System (Netz) versteht man eine Registrierung (bzw. "attach") des Fernmeldeendgerätes bei mindestens einer der Stationen des Systems (Netzes). Unter den Routing-Daten sind diejenigen Daten zu verstehen, die für das sogenannte "Routing", d.h. das Herstellen einer Fernmeldeverbindung zwischen zwei Anschlüssen eines u.U. aus mehreren z.T. unterschiedlichen Teilnetzen bestehenden Fernmeldenetzes, benötigt werden. Falls einer der Anschlüsse aus einer mobilen Station eines Mobilfunknetzes besteht, umfassen die Routing-Daten auch die Mobilitätsdaten dieser mobilen Station.

### Darstellung der Erfindung

Der Erfindung liegt die Aufgabe zugrunde, ein Verfahren für den kombinierten Betrieb von einem CT-System und einem Mobilfunksystem bereit zu stellen, das eine möglichst einfache und kostengünstige Anpassung bereits bestehender CT-Systeme und/oder Mobilfunksysteme für den kombinierten Betrieb erlaubt.

Die Lösung der Aufgabe ist Gegenstand der unabhängigen Patentansprüche 1, 7, 8, 9 und 11.

Gemäss der Erfindung werden bei einem Verfahren für den kombinierten Betrieb von einem CT-System und einem Mobilfunksystem die für den kombinierten Betrieb benötigten zusätzlichen Informationen über das Mobilfunksystem abgefragt. Als "die für den kombinierten Betrieb benötigten zusätzlichen Informationen" sind nur diejenigen Informationen zu verstehen, die für den kombinierten Betrieb im Vergleich zum nicht kombinierten Betrieb der beiden Systeme zusätzlich benötigt werden. An der Übertragung der Daten (insbesondere auch der Routing-Daten), die bereits beim nicht kombinierten Betrieb des CT-Systems und/oder des Mobilfunksystems zu übertragen sind, wird nichts geändert.

Das erfindungsgemässe Verfahren für den kombinierten Betrieb von einem CT-System und einem Mobilfunksystem macht im Gegensatz zu den bekannten Verfahren keinerlei Einschränkungen in Bezug auf den Anschluss der Feststation des CT-Systems an das Fernmeldenetz oder in Bezug auf auf den für das CT-System verwendeten Standard. Das erfindungsgemässe Verfahren ist sowohl für alle üblichen Fernmeldenetzanschlüsse als auch für alle üblichen CT-Standards wie GSM-CTS, CT1, DECT usw. verwendbar. Die einzige Voraussetzung für das erfindungsgemässe Verfahren für den kombinierten Betrieb ist, dass der Abdeckungsbereich des Mobilfunksystems und der Abdeckungsbereich des CT-Systems mindestens teilweise überlappend sind. In denjenigen Bereichen, die jeweils nur durch eines der beiden Systeme abgedeckt werden, ist zwar nicht ein kombinierter Betrieb, aber immerhin ein alleiniger, nicht kombinierter Betrieb des jeweiligen Systems möglich. Die Voraussetzung für das erfindungsgemässe Verfahren ist viel weniger einschränkend als die Voraussetzung gemäss den bekannten Vorschlägen für den kombinierten Betrieb, wonach die Feststation eines CT-Systems an einen digitalen Anschluss, insbesondere einen ISDN Anschluss, eines Fernmeldenetzes angeschlossen sein muss.

Vorzugsweise versucht ein zur Kommunikation sowohl mit dem CT-System als auch mit dem Mobilfunksystem geeignetes mobiles Fernmeldeendgerät sich beim CT-System zu registrieren, sobald es sich in der Nähe einer Feststation des CT-Systems befindet, und sich nach einer erfolgreichen Registrierung beim CT-System mittels eines "detach"-Vorganges beim Mobilfunksystem 18 abzumelden. Die Informationen über den "detach"-Vorgang, indbesondere die Information, dass sich das Fernmeldeendgerät abgemeldet hat, wird vorzugsweise in einer Speichervorrichtung des Mobilfunksystems gespeichert Weiter kann das mobile Fernmeldeendgerät sich nach einer erfolgreichen Registrierung beim CT-System mittels eines "attach"-Vorganges beim Mobilfunksystem anmelden (vorzugsweise nachdem es sich vorher abgemeldet hat), wobei bei der Anmeldung beim Mobilfunksystem Informationen über den "attach"-Vorgang, insbesondere über die Identität des CT-Systems, bei welchem sich das mobile Fernmeldeendgerät registriert hat, in einer Speichervorrichtung des Mobilfunksystems gespeichert werden.

Bei einer Ausführungsart der Erfindung wird ein Einnummern-Dienst bereitgestellt, um mit Hilfe von beim Mobilfunksystem abfragbaren Informationen (insbesondere solchen, die in der Speichervorrichtung gespeichert sind) einem Teilnehmer eines Fernmeldenetzes, das mit dem CT-System und dem Mobilfunksystem verbunden ist, zu erlauben, das mobile Fernmeldeendgerät stets unter einer einzigen, gleichbleibenden Nummer zu erreichen. Vorzugsweise kann der Einnummerndienst auch von Teilnehmern des Mobilfunksystems oder des CT-Systems benutzt werden.

Das Mobilfunksystem kann beispielsweise nach dem GSM Standard betrieben werden, und das CT-System kann nach einem der Standards DECT, CT1, GSM-CTS oder irgend einem anderen für CT-Systeme geeigneten Standard betrieben werden.

Eine Anordnung zur Durchführung des erfindungsgemässen Verfahrens umfasst eine Feststation des CT-Systems, ein zur Kommunikation sowohl mit dem CT-System als auch mit dem Mobilfunksystem geeignetes mobiles Fernmeldeendgerät, eine Speichervorrichtung (vorzugsweise beim Mobilfunksystem) und eine Schaltungsvorrichtung zum Routen eines Anrufs von einem Teilnehmer eines Fernmeldenetzes zum mobilen Fernmeldeendgerät. Vorzugsweise können auch Anrufe vom Mobilfunksystem und/oder vom CT-System geroutet werden.

Bei einer Ausführungsart der Erfindung ist die Feststation über einen analogen Anschluss an ein Fernmeldenetz angeschlossen.

Ein mobiles Fernmeldeendgerät gemäss der Erfindung hat eine Schaltung um sich bei einem CT-System registrieren zu können, sobald es sich in der Nähe einer Feststation des CT-Systems befindet, eine Schaltung um einen "detach"-Vorgang beim Mobilfunksystem durchführen zu können, und eine Schaltung zur Übermittlung von Informationen über den "detach"-Vorgang an die Speichervorrichtung des Mobilfunksystems. Vorzugsweise hat das mobile Fernmeldeendgerät weiter eine Schaltung zur Durchführung eines "attach"-Vorganges beim Mobilfunksystem und eine Schaltung zur Übermittlung von Informationen über den "attach"-Vorgang an die Speichervorrichtung des Mobilfunksystems. Diese Information kann Informationen betreffend des CT-System enthalten, bei dem sich das mobile Fernmeldeendgerät registriert hat.

Eine Schaltungsvorrichtung gemäss der Erfindung weist eine Vorrichtung zum Abfragen von Informationen, insbesondere aus der Speichervorrichtung, beim Mobilfunksystem auf, und eine Vorrichtung zum Bereitstellen eines Einnummern-Dienstes, um mit Hilfe der Informationen Anrufe zum Fernmeldeendgerät routen zu können, wobei das Fernmeldeendgerät stets mit einer einzigen, gleichbleibenden Nummer angerufen wird.

Die Abdeckungsbreiche des Mobilfunksystems und des CT-Systems sind teilweise überlappend. In einigen Fällen, z.B. wenn das Mobilfunksystem nach dem GSM-Standard und das CT-System nach dem GSM-CTS Standard betrieben werden, können die beiden Systeme zudem auch frequenzmässig überlappend betrieben werden.

Die nachfolgende detaillierte Beschreibung der vorliegenden Erfindung dient in Verbindung mit der beiliegenden Zeichnung nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen. Insbesondere ist nach dem erfindungsgemässen Verfahren auch der kombinierten Betrieb von mehreren CT-Systemen und/oder mehreren Mobilfunksystemen möglich, obwohl der Einfachheit halber stets nur der kombinierte Betrieb von einem CT-System und einem Mobilfunksystem beschrieben wird.

### Kurze Beschreibung der Zeichnung

Die Zeichnung stellt eine bevorzugte Ausführungsart der vorliegenden Erfindung dar. Es zeigt:

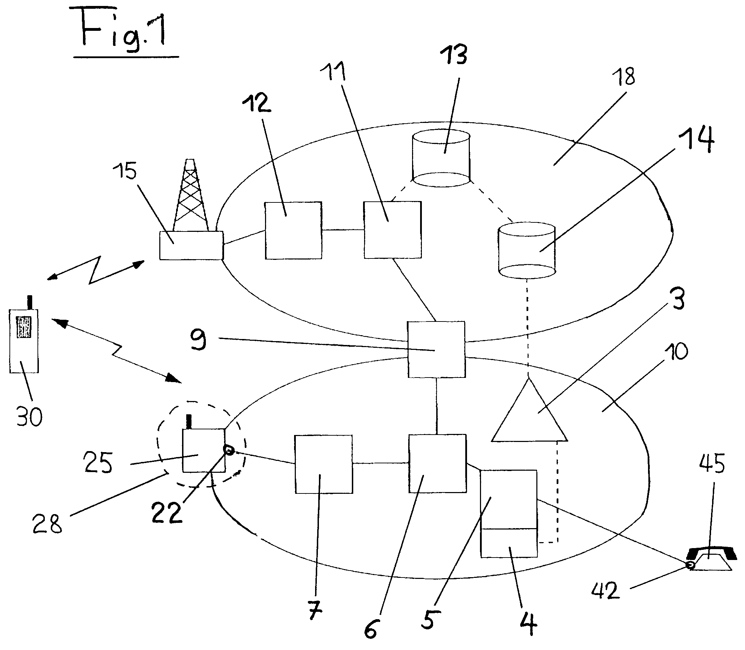

- Fig. 1: eine vereinfachte schematische Darstellung eines CT-Systems und eines Mobilfunksystems, die nach dem Verfahren gemäss der Erfindung kombiniert betrieben werden, um in Verbindung mit einem Fernmeldenetz einen Einnummern-Dienst bereit stellen zu können.

### Wege zur Ausführung der Erfindung

Figur 1 stellt in vereinfachter Form ein Mobilfunksystem 18 und ein CT-System 28 dar, die gemäss dem Verfahren der Erfindung in Kombination miteinander betrieben werden. Die Abdeckungsbereiche (nicht dargestellt) der beiden Systeme überlappen sich mindestens teilweise. Bei der dargestellten Ausführungsart der Erfindung werden das CT-System 28 nach dem DECT Standard und das zellulare Mobilfunksystem 18 nach dem GSM-Standard betrieben.

Eine Feststation 25 (Fixed Part) des CT-Systems 28 ist über einen Anschluss 22 und einen LE 7 (Local Exchange, Amtszentrale) an ein ortsfestes, üblicherweise drahtgebundenes Fernmeldenetz 10 angeschlossen. Bei einem Mobilfunksystem oder GSM-Netz 18 sind Basisstationen 15 über BSC 12 (Base Station Controller) einem MSC 11 (Mobile Switching Center) des GSM-Netzes 18 verbunden. Das MSC 11 und somit das GSM-Netz 18 sind über ein GMSC 9 (Gateway-MSC) mit dem Fernmeldenetz 10 verbunden. Das GSM-Netz 18 kann mit weiteren Fernmeldenetzen verbunden sein. Ans Fernmeldenetz 10 sind zudem eine Vielzahl von weiteren Teilnehmern angeschlossen. In der Figur 1 ist als Beispiel dafür ein Telefon 45 dargestellt, das über einen Anschluss 42 an einem LE 5 (Local Exchange oder Transit Exchange) und damit an dem Fernmeldenetz 10 angeschlossen ist.

Ein mobiles Fernmeldeendgerät 30 ist zur Kommunikation über eine Funk-Schnittstelle (air interface) sowohl mit dem CT-System 28 als auch mit dem Mobilfunksystem 18 ausgerüstet und ist somit ein DMT (Dual Mode Terminal). In der Figur 1 sind die Funk-Verbindungen mit gezackten Pfeilen dargestellt. Bei der Kommunikation mit der Feststation 25 des DECT-Systems 28 funktioniert das DMT 30 als schnurloses Telefon (Portable Part) des CT-Systems 28, bei der Kommunikation mit der Basisstation 15 des GSM-Netzs 18 übernimmt es die Rolle einer mobilen Station des Mobilfunksystems 18.

Das DMT 30 kann entweder im Abdeckungsbereich des GSM-Netzs 18, im Abdeckungsbereich des CT-Systems 28 oder in einem Bereich, der durch keines der beiden Systeme abgedeckt wird, liegen.

### 1. Erste Ausführungsart des Verfahrens

Das MSC 11 des GSM-Netzs 18 kann zwischen zwei unterschiedlichen Zuständen des DMT 30 unterscheiden: entweder ist das DMT 30 beim GSM-Netz 18 "attached" (angemeldet), oder es ist "detached" (nicht angemeldet). Das DMT 30 hat nur eine einzige zugeordnete Feststation 25 des CT-Systems 28, mit der es über eine Funk-Schnittstelle kommunizieren kann. Wenn das DMT 30 feststellt, dass es sich in der Nähe seiner zugeordneten Feststation 25 befindet, versucht es, sich bei der Feststation 25 zu registrieren. Falls die Registrierung bei der Feststation 25 gelingt, meldet sich das DMT 30 einen "detach"-Vorgang beim GSM-Netz 18 ab. Dieser Vorgang wird im VLR 13 (Visiting Location Register) festgehalten. Wenn das DMT 30 den Abdeckungsbereich der Feststation 25 verlässt, versucht es sich sich in einem "attach"-Vorgang beim GSM-Netz 18 wiederum anzumelden. Im erfolgreichen Fall wird dies wiederum im VLR festgehalten.

Die für den kombinierten Betrieb benötigte Information, ob das DMT 30 beim GSM-Netz 18 "attached" (angemeldet) ist oder nicht, wird nun erfindungsgemäss durch eine Abfrage des VLR 13 (ausgelöst durch eine Abfrage des HLR 14 (Home Location Register)) vom Festnetz 10 aus in Erfahrung gebracht.

Bei dieser Ausführungsart der Erfindung kann ein Anrufer vom Fernmeldenetz 10 aus, z.B. das Telefon 45, das DMT 30 unter einer einzigen persönlichen Nummer anrufen. Diese persönliche Nummer kann entweder eine geographische Bedeutung haben, z.B. Nummer des Festanschlusses 22 (in diesem Fall muss der LE (Local Exchange), an den der Teilnehmer angeschlossen ist, den Einnummern-Dienst unterstüzen) oder sie kann eine nicht geographische Nummer für diesen Dienst sein (in diesem Fall kann die IN-Funktion (IN = Intelligent Network) irgendwo im Netz untergebracht sein). Das Fernmeldenetz 10 unterstützt einen Dienst für den Einnummern-Betrieb, indem in einer Datenbank zu der persönlichen Nummer ein Nummernpaar bestehend aus der GSM-Nummer eines DMT 30 und der Nummer des Anschlusses 22 der dem DMT 30 zugeordneten Feststation 25 gespeichert sind. Die persönliche Nummer kann auch mit einer der beiden letztgenannten Nummern übereinstimmen. Sämtliche Fernmeldeanrufe die persönliche Nummer werden zunächst an eine Schaltzentrale geroutet, die den Einnummern-Dienst unterstützt. Diese hat nebst dem Zugriff auf die Datenbank, in der die Nummern gespeichert sind, auch Zugriff auf die für den kombinierten Betrieb benötigten zusätzlichen Informationen, nämlich die Informationen, ob das DMT 30 beim GSM-Netz 18 "attached" (angemeldet) ist oder nicht.

Die zwei zentralen Vorgänge, nämlich ein Anruf vom Fernmeldenetz 10 (z.B. vom Telefon 45) an das DMT 30 und ein Anruf vom DMT 30 ans Fernmeldenetz (z.B. an das Telefon 45) können dann wie folgt beschrieben werden:

### 1.1 Anruf vom DMT 30 aus

Wenn das DMT 30 beim GSM-Netz 18 "attached" (angemeldet) ist, wird bei einem vom DMT 30 ausgehenden Anruf versucht, eine Verbindung zum gewünschten Anschluss 42 über das GSM-Netz 18 aufzubauen.

Wenn das DMT 30 beim CT-System 28 registriert ist, wird bei einem vom DMT 30 ausgehenden Anruf versucht, eine Verbindung zum gewünschten Anschluss 42 über das CT-System 28 aufzubauen.

Falls sich das DMT 30 ausserhalb des Abdeckungsbereichs aller Systeme befindet, zu denen es Zugang hat, kann keine Verbindung aufgebaut werden.

### 1.2 Anruf an das DMT 30

Ein Anruf an das DMT 30 z.B. vom Anschluss 42 aus dem Fernmeldenetz 10 wird zu einem LE 5 (Local Exchange) geroutet, der zum Anrufer gehört. Dieser LE 5 umfasst einen SSP 4 (Service Switching Point). Der SSP 4 löst den Einnummern-Dienst in einem SCP 3 (Service Control Point) für diesen Dienst aus. Der SCP 3 greift auf die der Festnummer zugeordneten GSM-Nummer zu und frägt das HLR 14 ab. Das HLR 14 frägt das VLR 13 ab, in welchem die letzten Meldungen über das DMT 30 gespeichert sind.

Wenn das DMT 30 beim GSM-Netz 18 "attached" (angemeldet) ist, wird versucht, eine Verbindung zum DMT 30 über das GSM-Netz 18 aufzubauen.

Wenn dies nicht gelingt (weil z.B. das DMT 30 nicht erreicht werden kann, obwohl es noch beim GSM-Netz 18 "attached" ist) oder wenn das DMT 30 beim GSM-Netz 18 "detached" ist, wird der Anruf vom Telefon 45 zum Anschluss 22 der Feststation 25 geroutet.

Wenn in keinem der obigen Fällen eine Verbindung hergestellt werden kann, kann der Anruf bei einer Variante des erfindungsgemässen Verfahrens zu einer Mailbox geroutet werden.

### 1.3 Bemerkungen zur ersten Ausführungsart der Verfahrens

Das oben dargestellte Verfahren ermöglicht einen kombinierten Betrieb eines GSM-Mobilfunksystems 18 mit irgend einem CT-System 28. Für die Implementierung eines Einnummern-Dienstes muss für jedes DMT 30 in einer Datenbank bloss eine Assoziierung der persönlichen Nummer zu einem Nummernpaar bestehend aus der GSM-Nummer des DMT 30 und der Nummer des Anschlusses 22 der zugeordneten Feststation 25 vorgenommen werden. Die für den kombinierten Betrieb benötigten zusätzlichen Informationen, nämlich die Informationen, ob das DMT 30 beim GSM-Netz 18 "attached" (angemeldet) ist oder nicht, können mit bereits bestehenden GSM-Funktionen und Prozeduren abgefragt werden. Ein kombinierter Betrieb von einem bestehenden CT-System und einem bestehenden GSM-Mobilfunksystem gemäss dieser Ausführungsart der Erfindung kann somit eingerichtet werden, indem ein entsprechender IN-Dienst (IN = Intelligent Network), der die obigen Operationen durchführt, bereit gestellt wird.

Die Lösung gemäss der oben dargestellten ersten Ausführungsart der Erfindung unterstützt allerding nur ein einziges zugeordnetes CT-System 28 für ein DMT 30.

Weiter ist nicht mehr möglich, den Anschluss 22 der Feststation 25 direkt anzuwählen (Anrufe werden stets über das GSM-Netz 18 geroutet, sobald das DMT 30 eingeschaltet ist und es sich ausserhalb des Abdeckungsbereichs der Feststation 25 des CT-Systems 28 befindet), falls die persönlichen Nummer mit der Nummer des Festanschlusses übereinstimmt. Man bemerke, dass die Nummer mit dem DMT 30 mitgenommen wird, sobald es von der Feststation 25 wegbewegt wird.

Sobald der GSM-Modus des DMTs 30 ausgeschaltet ist, werden Anrufe stets an den Anschluss 22 der Feststation 25 geroutet. Es gibt mehrere Situationen, wo dies unerwünscht ist, wie z.B. dann, wenn das DMT 30 ausgeschaltet ist oder sich ausserhalb des Abdeckungsbereichs der beiden Systeme beifndet.

### 2. Zweite Ausführungsart des Verfahrens

Bei einer zweiten Ausführungsart des erfindungsgemässen Verfahrens werden die oben erwähnten Nachteile der ersten Ausführungsart überwunden. Für den Einnummern-Dienst gemäss dieser Ausführungsart der Erfindung sind dem Teilnehmer im GSM-Netz mehrere Identitäten zugewiesen (charakterisiert durch die IMSI (International Mobile Station Identity = netzinterne Nummer) und die Rufnummer MSISDN des DMTs 30. Jede dieser Identitäten steht für einen Anschluss, zu dem das DMT 30 Zugang hat: GSM-Anschluss, Anschluss eines ersten CT-Systems, Anschluss eines zweiten CT-Systems usw.

Das Grundprinzip des Verfahrens besteht darin, dass das DMT 30 das GSM-Netz 18 über den Anschluss informiert, bei welchem es sich gerade befindet, indem es sich mit der zu diesem Anschluss assoziierten IMSI beim GSM-Netz 18 in einem "attach"-Vorgang anmeldet.

Wenn das DMT 30 feststellt, dass es sich in der Nähe einer Feststation 25 eines CT-Systems befindet, zu dem es Zugang hat, versucht es, sich bei diesem CT-System zu registrieren. Falls die Registrierung beim CT-System gelingt, meldet sich das DMT 30 mit seiner bisherigen Identität ab undin einem "attach"-Vorgang mit der zu diesem CT-System assoziierten IMSI beim GSM-Netz 18 neu an. Dieser Vorgang wird im VLR 13 (Visiting Location Register) festgehalten. Wenn das DMT 30 den Abdeckungsbereich der Feststation 25 verlässt, kehrt es die obigen Schritte um, d.h. es führt einen "detach" mit der zu diesem CT-System assoziierten IMSI beim GSM-Netz 18 durch und meldet sich mit der zum GSM-Netz gehörenden IMSI neu an. Dies wird wiederum im VLR festgehalten. Somit entsteht im VLR dadurch ein Wissen darüber, über welchen Anschluss das DMT zur Zeit gerade erreichbar ist. Dieses Wissen kann dann wieder mit den Prozeduren von einem IN-Dienst abgefragt werden.

Die zwei zentralen Vorgänge, nämlich ein Anruf vom Fernmeldenetz 10 (z.B. vom Telefon 45) an das DMT 30 und ein Anruf vom DMT 30 ans Fernmeldenetz (z.B. an das Telefon 45) können dann wie folgt beschrieben werden:

### 2.1 Anruf vom DMT 30 aus

Ein Verbindungsaufbau zu einem gewünschten Anschluss 42 wird über die gegenwärtig aktive Luft-Schnittstelle ausgeführt (z.B. GSM, CT-System 1, CT-System 2 usw.).

Wenn das DMT 30 ausserhalb des Abdeckungsbereichs der Netze liegt, zu denen es eine Zugangsberechtigung hat, kann keine Verbindung aufgebaut werden.

### 2.2 Anruf an das DMT 30

Ein Anruf an das DMT 30 z.B. vom Anschluss 42 aus dem Fernmeldenetz 10 wird zu einem LE 5 (Local Exchange oder Transit Exchange) geroutet, der eine SSP Funktionalität unterstützt. Dieser LE 5 umfasst einen SSP 4 (Service Switching Point). Der SSP 4 löst den Einnummern-Dienst in einem SCP 3 (Service Control Point) für diesen Dienst aus. Der SCP 3 greift auf die zur persönilchen Nummer assoziierten MSISDNs zu und frägt das HLR 14 ab. Das HLR 14 frägt das VLR 13 ab (es können dies verschiedene VLRs zu den verschiedenen Nummern sein), in welchem die letzten Meldungen über das DMT 30 gespeichert sind, und erhält als Antwort höchstens eine MSRN (Mobile Station Roaming Number). Die Anwort zu den anderen MSISDNs wird lauten, dass der Teilnehmer mit der entsprechenden MSIDDN nicht erreichbar ist.

Wenn das DMT 30 beim GSM-Netz 18 mit der GSM-IMSI "attached" (angemeldet) ist, welche der SCP 3 aus der Antwort vom HLR 14 detektiert (es wird eine MSRN geliefert), wird versucht, eine Verbindung zum DMT 30 über das GSM-Netz 18 aufzubauen.

Wenn das DMT 30 mit einer IMSI eines seiner zugehörigen CT-Systeme registriert ist, greift der SCP auf die assoziierte Teilnehmernummer der CT-Feststation zu (Rufnummer SN im Falle eines PSTN oder MSN im Falle eines ISDN) und routet den Anruf über das Festnetz 10 (PSTN oder ISDN) zum Anschluss 22 des CT-Systems. Bei einer Variante des erfindungsgemässen Verfahrens kann der SCP 3 parallel dazu versuchen, die Verbindung über GSM aufzubauen unter Verwendung der MSISDN des CT-Systems.

Wenn die obigen Versuche für den Verbindungsaufbau nicht gelingen oder wenn das DMT 30 beim GSM-Netz 18 "detached" ist, kann bei einer weiteren Variante des erfindungsgemässen Verfahrens der Anruf zu einer Mailbox geroutet werden.

### 2.3 Bemerkungen zur zweiten Ausführungsart der Verfahrens

Wie bei der ersten Ausführungsart ermöglicht auch die zweite Ausführungsart des Verfahrens einen kombinierten Betrieb eines GSM-Netzes 18 mit einem CT-System 28, das nach irgend einem Standard betrieben wird, wie z.B. DECT, GSM-CTS, CT1 usw. Für den Anschluss der Feststation oder der Feststationen des CT-Systems können an ein Festnetz gibt es ebenfalls keine Einschränkungen, sie können z.B. an ein PSTN-, ein ISDN oder irgend ein anderes Netz angeschlossen sein. Die einzige Voraussetzung für das erfindungsgemässe Verfahren ist, dass der Abdeckungsbereich des Mobilfunksystems 18 und der Abdeckungsbereich eines CT-Systems 28 mindestens teilweise überlappend sind, nämlich in dem Bereich, über welchen der Benutzer in den Abdeckungsbereich des CT-Systems eintritt. Dies ist nötig, damit sich das DMT 30 nach einer Registrierung beim CT-System beim GSM-Netz unter seiner bisherigen Identität abmelden kann und in einem "attach"-Vorgang mit der zu diesem CT-System assoziierten IMSI beim GSM-Netz 18 anmelden kann. Es ist zu bemerken, dass es nicht nötig ist, dass des ganze Abdeckungsbereich des CT-Systems auch durch das GSM-Netz abgedeckt wird (z.B. in einem Gebäude, in einem Keller usw.) Die Voraussetzung für den kombinierten Berieb ist somit nicht sehr einschränkend. Sie ist zumindest viel weniger einschränkend als die Voraussetzung, dass die CT-Stationen an ein ISDN angeschlossen sein müssen.

Die vorliegende Lösung basiert vollständig auf bereits bestehenden GSM-Funktionen und Prozeduren. Für einen kombinierten Betrieb von einem bestehenden CT-System und einem bestehenden GSM-Mobilfunksystem gemäss dieser Ausführungsart der Erfindung ist eine Anpassung der mobilen Fernmeldeendgeräte (DMTs) und eine einfache Erweiterung des SIM (Subscriber Identity Module) eines Teilnehmers des GSM-Netzes erforderlich, um die verschiedenen IMSIs und ihre Beziehung zu den CT-Komponenten speichern zu können.

Das Hinzufügen einer neuen CT-Station erfordert eine Aufdatierung des SIM, was durchgeführt werden kann, indem eine SMS-Meldung (SMS = Short Message Service) an die SIM geschickt wird.

Manchmal befindet sich der Benutzer eines DMTs am Rand des Abdeckungsbereichs des CT-Systems. In diesem Falle neigt das DMT dazu, zwischen dem CT-System und dem GSM-Netz hin und her zu schalten. Dies kann verhindert werden, indem die Häufigkeit des hin und her Schaltens begrenzt wird. Als Folge davon kann das DMT für einige Zeit im GSM-Modus verriegelt sein, obwohl dies nicht der bevorzugte Modus ist. Bei der vorliegenden Lösung für den kombinierten Betrieb eines DECT-Systems mit einem GSM-Netz wird diese Situation einfach durch einen impliziten Schaltvorgang gelöst: Wenn sich das DMT am Rand des Abdeckungsbereichs einer CT-Feststation befindet, zu der es Zugang hat, und es nicht mehr fähig ist, um die Paging-Meldungen zuverlässig zu decodieren, beobachtet es die Paging-Meldungen vom GSM-Netz. Weil das Netz das Paging des DMTs sowohl über das CT-System als auch über GSM ausführt, wird gemäss dieser Lösung der Anruf wenn immer möglich über das CT-System geroutet, eine erfolgreiche Vermittlung des Anrufs gewährleistet und der Datenaustausch zu Signalisierungszwecken niedrig gehalten.

Man bemerke, dass das parallele "Paging" über das CT-System und das GSM ausgeführt wird, um die MSRN freizugeben, welche sonst für eine beträchtliche Zeitspanne blockiert wäre. Für die Zukunft wird empfohlen, die HLR-VLR Prozeduren um eine Abfrage des Typs "Ist das DMT attached?" zu erweitern, welche keine MSRN zuweisen würde. In diesem Falle könnte das "Paging" im wesentlichen auf die CT-Systeme begrenzt und nur auf das GSM ausgedehnt werden, wenn es keine Paging-Antwort vom CT-System gibt, was im Falle eines PSTN-Hausanschlusses durch einen "Time-out" festgestellt würde.

Gemäss der dargestellten Ausführungsart des erfindungsgemässen Verfahrens kann jederzeit die Verfügbarkeit eines DMTs 30 unter all seinen möglichen physischen Adressen beim GSM abgefragt werden. Gegebenenfalls kann deshalb dem Anrufer unmittelbar auf seinen Anruf mitgeteilt werden, dass das DMT 30 zur Zeit nicht erreichbar ist. Er muss, im Gegensatz zu heute, nicht eine ganze Reihe von Nummern nacheinander einstellen und jedesmal einige Male klingeln lassen, bis er den Gesprächspartner findet oder auch nicht findet.

Bei der dargestellten Ausführungsart des Verfahrens werden alle Telefone mit der gleichen Nummer - z.B. zu Hause - klingeln, wenn sich das DMT 30 innerhalb des Abdeckungsbereichs des entsprechenden CT-Systems 28 befindet. Dies ist heutzutage üblich und kein Problem. Der Dienst kann jedoch verbessert werden, indem im Falle eines ISDN-Anschlusses eine "dedicated MSN" oder im Falle eines PSTN-Anschlusses ein "Class-Service" verwendet wird. Man bemerke, dass dies lediglich zu einer Verbesserung des Einnummern-Dienstes führt und für das Funktionieren des Dienstes nicht benötigt wird.

Die für den kombinierten Betrieb benötigten Informationen, bei welchem der im GSM-SIM des DMT 30 aufgeführten Anschlüsse das DMT 30 registriert ist, werden erfindungsgemäss beim GSM-Mobilfunksystem 18 abgefragt.

Bei dieser Ausführungsart der Erfindung kann ein Anrufer vom Fernmeldenetz 10 aus jeden der im SIM eines DMT 30 aufgeführten Anschlüsse im Prinzip auch direkt anrufen.

Im GSM-Netz führt das DMT 30 in gewissen Zeitabständen einen sogenannten "periodic lation updating"-Vorgang durch, falls dieser verlangt wird.

Zusammenfassend ist festzustellen, dass durch die Erfindung ein Verfahren für den kombinierten Betrieb von einem CT-System und einem Mobilfunksystem bereit gestellt wird, wobei die für den kombinierten Betrieb benötigten zusätzlichen Informationen beim Mobilfunksystem abgefragt werden. Dadurch wird ein kombinierter Betrieb auch mit CT-Systemen ermöglicht, deren Feststation nicht an ein Fernmeldesystem angeschlossen ist, das zum Austausch von digitalen Daten vorgesehen ist. Insbesondere ermöglicht das erfindungsgemässe Verfahren den kombinierten Betrieb eines GSM-Mobilfunksystems und eines CT-Systems, das an ein analoges Fernmeldenetz angeschlossen ist. Zudem stellt eine Ausführungsart der Erfindung im Falle eines GSM-Mobilfunksystems in Verbindung mit einem Fernmeldenetz eine einfache Möglichkeit für die Realisierung eines Einnummern-Dienstes für die kombiniert betriebenen Systeme

## Patentansprüche

1. Verfahren für den kombinierten Betrieb von einem CT-System (28) und einem Mobilfunksystem (18), dadurch gekennzeichnet, dass die für den kombinierten Betrieb benötigten zusätzlichen Informationen beim Mobilfunksystem (18) abgefragt werden.

2. Verfahren nach Anspruch 1, dadurch gekennzeichnet, dass ein zur Kommunikation sowohl mit dem CT-System (28) als auch mit dem Mobilfunksystem (18) geeignetes mobiles Fernmeldeendgerät (30) sich beim CT-System (28) zu registrieren versucht, sobald es sich in der Nähe einer Feststation (25) des CT-Systems (28) befindet, und sich nach einer erfolgreichen Registrierung beim CT-System (28) mittels eines "detach"-Vorganges beim Mobilfunksystem 18 abmeldet, wobei Informationen über den "detach"-Vorgang in einer Speichervorrichtung (13, 14) des Mobilfunksystems (18) gespeichert werden.

3. Verfahren nach Anspruch 2, dadurch gekennzeichnet, dass das mobile Fernmeldeendgerät (30) sich nach einer erfolgreichen Registrierung beim CT-System (28) mittels eines "attach"-Vorganges beim Mobilfunksystem 18 anmeldet, wobei Informationen über den "attach"-Vorgang in einer Speichervorrichtung (13, 14) des Mobilfunksystems (18) gespeichert werden.

4. Verfahren nach einem der Ansprüche 1 bis 3, dadurch gekennzeichnet, dass ein Einnummern-Dienst bereitgestellt wird, um mit Hilfe von beim Mobilfunksystem 18 abfragbaren, insbesondere in der Speichervorrichtung (13, 14) gespeicherten Informationen einem Teilnehmer (45) eines mit dem CT-System 28 und dem Mobilfunksystem 18 verbundenen Fernmeldenetzes (10) zu erlauben, das mobile Fernmeldeendgerät (30) stets unter einer einzigen, gleichbleibenden Nummer zu erreichen.

5. Verfahren nach einem der Ansprüche 1 bis 4, dadurch gekennzeichnet, dass das Mobilfunksystem (18) nach dem GSM Standard betrieben wird.

6. Verfahren nach einem der Ansprüche 1 bis 6, dadurch gekennzeichnet, dass das CT-System (28) nach einem der Standards DECT, CT1 oder GSM-CTS betrieben wird.

7. Anordnung zur Durchführung des Verfahrens nach einem der Ansprüche 1 bis 6, gekennzeichnet durch eine Feststation (25) des CT-Systems (28), ein zur Kommunikation sowohl mit dem CT-System (28) als auch mit dem Mobilfunksystem (18) geeignetes mobiles Fernmeldeendgerät (30), eine Speichervorrichtung (13, 14) und eine Schaltungsvorrichtung (3; 4; 5; 6; 7; 9; 11; 12) zum Routen eines Anrufs von einem Teilnehmer (45) eines mit dem CT-System 28 und dem Mobilfunksystem 18 verbundenen Fernmeldenetzes (10) zum mobilen Fernmeldeendgerät (30).

8. Feststation (25) für Anordnung nach Anspruch 7, dadurch gekennzeichnet, dass die Feststation (25) über einen analogen Anschluss an ein Fernmeldenetz (10) angeschlossen ist.

9. Mobiles Fernmeldeendgerät (30) für die Anordnung nach Anspruch 7, gekennzeichnet durch eine Schaltung zur Durchführung eines Registrierungsvorganges beim CT-System (28), sobald es sich in der Nähe einer Feststation (25) des CT-Systems (28) befindet, eine Schaltung zur Durchführung eines "detach"-Vorganges beim Mobilfunksystem 18, und eine Schaltung zur Übermittlung von Informationen über den "detach"-Vorgang an die Speichervorrichtung (13, 14) des Mobilfunksystems (18).

10. Mobiles Fernmeldeendgerät (30) nach Anspruch 9, dadurch gekennzeichnet, dass sie weiter eine Schaltung zur Durchführung eines "attach"-Vorganges beim Mobilfunksystem 18 und eine Schaltung zur Übermittlung von Informationen über den "attach"-Vorgang an die Speichervorrichtung (13, 14) des Mobilfunksystems (18) aufweist.

11. Schaltungsvorrichtung (3; 4; 5; 6; 7; 9; 11; 12) für Anordnung nach Anspruch 7, gekennzeichnet durch eine Vorrichtung zum Abfragen von Informationen beim Mobilfunksystem 18, insbesondere aus der Speichervorrichtung (13, 14), und eine Vorrichtung zum Bereitstellen eines Einnummern-Dienst, um mit Hilfe der Informationen den stets mit einer einzigen, gleichbleibenden Nummer erfolgenden Anruf vom Teilnehmer (45) zum Fernmeldeendgerät (30) zu routen.
